(19) Europäisches Patentamt
European Patent Office
Office européen des brevets

(11) EP 4 273 642 A1

(12) EUROPEAN PATENT APPLICATION

(43) Date of publication:
08.11.2023 Bulletin 2023/45

(51) International Patent Classification (IPC):
*G05B 19/4061* (2006.01)

(21) Application number: 23170589.8

(22) Date of filing: 28.04.2023

(52) Cooperative Patent Classification (CPC):
**G05B 19/4061;** G05B 2219/45174;
G05B 2219/49124; G05B 2219/49129;
G05B 2219/49136; G05B 2219/50125

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.05.2022 IT 202200009287**

(71) Applicant: SCM Group S.p.A.
**47921 Rimini (RN) (IT)**

(72) Inventors:
• IANNUCCI, Federico
**47921 RIMINI (RN) (IT)**
• MUCCIOLI, Gianluca
**47921 RIMINI (RN) (IT)**

(74) Representative: **Tiburzi, Andrea et al**
**Barzanò & Zanardo Roma S.p.A.**
**Via Piemonte 26**
**00187 Roma (IT)**

(54) **METHOD FOR DETERMINING THE POSITION OF THE MOBILE DEVICES IN A WORKING PLANE AND MACHINING CENTER IMPLEMENTING SUCH METHOD**

(57) The present invention concerns a method for determining the position of mobile devices ($21_{a,b,...i,...n}$; $24_{aa,bb,...ij,...nn}$) in a working center (C) for machining at least one workpiece (W), in particular a panel, wherein said working center (C) comprises a working plane (2), for supporting said at least one panel (W), comprising in turn mobile devices ($21_{a,b,...i,...n}$; $24_{aa,bb,...ij,...nn}$) capable to move in a first direction parallel to a first axis (X) and a second direction parallel to a second axis (Y) orthogonal to said first direction, a working unit (3) comprising at least one working head (32), said method comprising the following steps:

a. acquiring a machining program, comprising the overall dimensions and/or the trajectories of said at least one working head (32) and the types of machining to be performed on said panel (W);

b. acquiring the arrangement of the initial configuration of said mobile devices ($21_{a,b,...i,...n}$; $24_{aa,bb,...ij,...nn}$) in said working plane (2);

c. identifying a zone ($Z_1$) on said working plane (2) in which a group of said mobile devices ($21_{a,b,...i,...n}$; $24_{aa,bb,...ij,...nn}$) involved in said machining program is arranged;

*d*. identifying the remaining group of said mobile devices ($21_{a,b,...i,...n}$; $24_{aa,bb,...ij,...nn}$) not involved in said machining program;

e. calculating a positioning range (R) for each mobile device of said remaining group of said mobile devices ($21_{a,b,...i,...n}$; $24_{aa,bb,...ij,...nn}$) along said first direction and/or along said second direction, with respect to said initial configuration, based on the dimensions of said machining zone ($Z1$).

The present invention also concerns a working center that implements the method.

Fig. 5

## Description

The present invention concerns a method for determining the position of mobile devices in a working plane.

The present invention also concerns a working center that implements this method.

## Field of the invention

More specifically, the invention concerns a method for positioning mobile devices in a working plane of a working center for panels, such as wood, plastic, ceramic, glass, fiberglass and similar panels, that is studied and manufactured in particular to allow faster reconfiguration of the mobile devices between one processing and another, thus optimizing the arrangement of the mobile devices in the working plane, according to the machining to be performed on the panel.

In the following the description will be addressed to a computerized numerical control working center in which the mobile devices are supporting bars and suction cups or clamps coupled to them, that can be manually moved, for the processing of wooden panels, but it is clear that the same should not be considered limited to this specific use.

## Background

Computerized numerical control working centers that carry out, by way of example, cutting, milling and drilling mainly on wood panels and materials with similar physical characteristics are well known.

Said working center include a working plane, on which the panels to be worked are fixed, and one or more operating groups equipped with working units, capable of having up to 5 interpolating axes.

The working plane includes a plurality of bars, movable so that they can be moved closer or away if necessary.

In addition, the plane with bars includes a plurality of coupling devices, such as suction cups or clamps, which are slidable along said bars, so that they can be moved closer or away each other, such as to create different configurations for locking the panels, even of different sizes.

Said bars are equipped with ducts for the vacuum supply, necessary to block the panels on the suction cups or clamps.

Up to six suction cups or clamps can be mounted on each bar of a manual bar table, which can be removed and then repositioned freely, depending on the processing to be performed on the panel to be processed.

As is currently well known in said manual working center, the bars and coupling devices are positioned manually along the base of the working center.

Therefore, it is necessary for an operator to place exactly the bars and coupling devices on the bars to carry out the required machining.

In general, between one processing and another, it is necessary to move both the bars and the coupling devices. In particular, the operation of repositioning coupling devices requires a long time and many moving operations, as well as the removal and addition of coupling devices on the same bar.

Currently, when the processing to be performed on the panel does not involve all the bars and all the devices with which a working center is equipped, these can be arranged in areas defined as "parking" areas, to avoid removals and additions.

Therefore, the operator places bars and coupling devices in areas of the working plane that himself considers not to be involved in the machining.

This means that sometimes the parking areas identified by the operator are not effectively free from processing, causing safety problems, as the tools used in the machining could impact with mobile devices that should not have occupied a certain area of the working plane.

Otherwise, it may take a long time for the operator to find the area of the plane suitable for parking mobile devices not involved in the processing.

## Purpose of the invention

In light of the above, it is, therefore, the purpose of this invention, to provide a method capable of provisioning the operator with indications related to the movement of the mobile devices, not involved in the processing of a panel, which is simple, efficient, safe and fast.

Another purpose of the present invention is to implement this method in a working center for the processing of panels, in particular wood panels.

## Object of the invention

Therefore, a method for determining the position of mobile devices in a working center for machining on at least a piece, in particular a panel, in which said working center includes a working plane, for the support of said at least one panel, comprising in turn mobile devices in a first direction parallel to a first axis and a second direction parallel to a second orthogonal axis to said first direction, a processing unit comprising at least one working head, said method comprising the following steps:

    a. acquiring a machining program, including the dimensions and/or trajectories of said at least one working head and the types of machining to be performed on said panel;
    b. acquiring the arrangement of the initial configuration of said mobile devices in said working plane;
    c. identifying a zone on that working plane in which a group of such mobile devices involved in said machining program is arranged;
    d. identifying the remaining group of such mobile devices not involved in that processing program;

e. calculating a positioning range for each mobile device of said remaining group of said mobile devices along that first direction and/or along that second direction, with respect to said initial configuration, based on the dimension of that machining zone.

Further according to the invention, said method includes the following additional steps:

f. discretizing into cells said working plane, wherein each cell corresponds to an area of the surface of said working plane;

f.1. checking the potential collision in each cell between said machining head, in the execution of said machining program and said mobile devices not involved in that machining head as a function of the trajectory and/or dimensions of that machining head;

f.2. determining on the basis of said steps f. and f.1 a collision matrix $M_{ij}^{0}$.

Preferably according to the invention, said cells are square and equal, and the measure of the side of said cells is 1 millimeter.

Again, according to the invention, wherein said mobile devices comprise supporting bars movable on said working plane along said first direction and mobile coupling devices for said workpiece, in particular suction cups or clamps, slidingly coupled to said supporting bars and movable along said second direction, characterized in that said step e. of calculating a positioning range comprises the following sub-steps:

e.1. calculating the positioning range of said supporting bars along said first direction;

e.2. for each of said supporting bars, calculating the positioning range of said mobile devices along said second direction.

Also according to the invention wherein said mobile devices comprise supporting bars movable on said working plane along said first direction and mobile coupling devices for said workpiece, in particular suction cups or clamps, slidingly coupled to said supporting bars and movable along said second direction, characterized in that it comprises the following step:

c.1. for each of said supporting bars arranged in said zone, calculating the positioning range of said mobile coupling devices, along said second direction.

An additional object of this invention is a working center for machining workpieces in particular panels in wood, ceramic, plastic, glass, fiberglass, comprising:

- a base for supporting said working center;
- a working unit comprising at least one working head which supports at least one tool;

- a working plane, coupled to said base, for supporting said workpieces, comprising in turn

    - a plurality of supporting bars, slidingly coupled and manually movable by an operator along said base;
    - a plurality of mobile coupling devices, for coupling said workpieces to be machined, slidingly coupled and manually movable by an operator along the respective supporting bars;

- a logic control unit for the operation of said working center, in which configurations of said working plane for the machining of said workpieces are stored;

said working center being characterized in that said logic control unit is configured to carry out the steps of the positioning method and to associate indications for an operator to said calculated positioning range, for the arrangement of said plurality of supporting bars and said plurality of mobile coupling devices.

Furthermore, according to the invention, wherein said mobile devices of said plurality of mobile coupling devices are suction cups or clamps.

Another object of this invention is a computer program comprising instructions which, when the program is executed by a computer, cause the computer to execute the method for determining the position of mobile devices in a working plane.

Also the subject of this invention is a computer readable storage medium comprising instructions which, when executed by a computer, cause the computer to execute the steps of the method for determining the position of mobile devices in a working plane.

**Brief description of the figures**

This invention will now be described for illustrative, but not limitative purpose, according to its preferred embodiment, with particular reference to the figures of the attached drawings, in which:

Figure 1 shows a perspective view of the working center that implements the method for determining the position of mobile devices in a working plane, according to the present invention;

Figure 2 shows a top-down view of the working plane of the working center shown in figure 1;

Figure 3 shows a schematic representation of a mobile device set-up of the working plane shown in figure 2;

Figure 3a shows a schematic view of a representation of the working plane of the working center;

Figure 4 shows a schematic representation of a further mobile device set-up of the working plane shown in figure 2;

Figure 5 shows a first flowchart of the method for determining the position of mobile devices in a working plane, according to the present invention;

Figure 6 shows a second flowchart of the method for determining the position of mobile devices in a working plane, according to the present invention; and

Figure 7 shows a third flowchart of the method for determining the position of mobile devices in a working plane, according to the present invention.

**Detailed description**

In the various figures similar parts will be indicated with same numerical references.

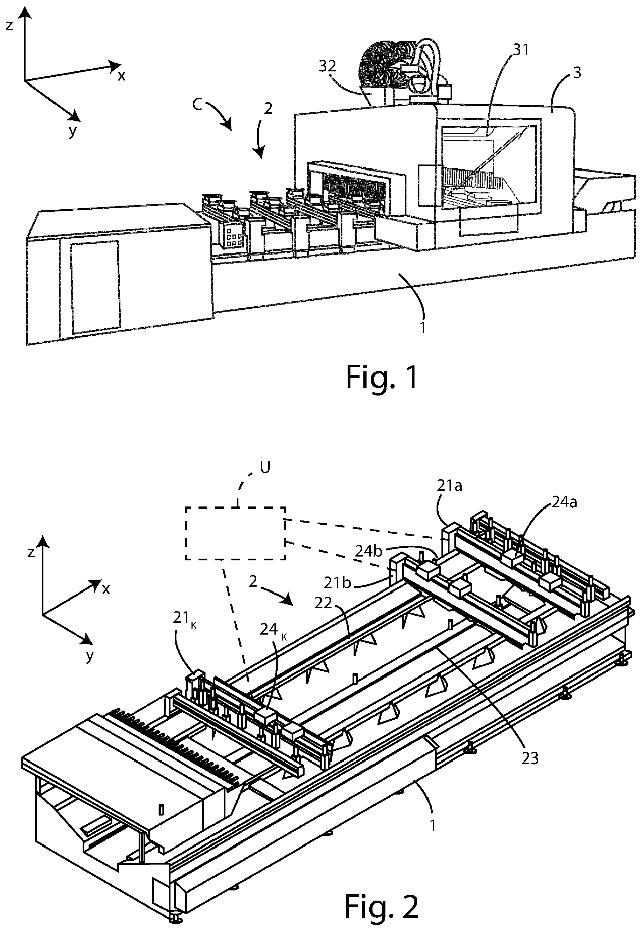

With reference to figures 1 and 2, there is shown a working center C for processing panels W made of wood, ceramics, plastics, glass, fiberglass and similar, which implements the method for determining the position of mobile devices in a working plane, object of this invention, which essentially comprises a base 1, through which this working center C rests on the ground, a working plane 2, for the support of the panels W to be processed, a machining unit 3, equipped with a machining head 32 arranged on a crossbar 31, said machining head 32 supporting machining tools of the panels W and a logic control unit U.

Said logic control unit U retains in a memory the configurations of the work table 2 necessary to carry out the work on the panels W to be processed and sends signals for the operation of the components of the working center C according to the different processes to be performed.

The logic control unit U is equipped with programmable processing means, such as CPUs, FPGAs or similar, for executing a program that can reproduce the algorithm behind the method for determining the position of mobile devices in a working plane.

The directions described below refer to a system of cartesian axes, as shown in Figure 1, comprising a first X axis, a second Y axis and a third Z axis.

With working plane 2 configurations it is intended the exact arrangement of mobile devices in said working plane 2.

Said logic control unit U shall comprise a module for receiving and transmitting in *wireless* mode.

Said base 1 has an elongated shape, whose main dimension extends mainly according to a direction of development parallel to the first axis n X.

Said working plane 2 is coupled to said base 1 and also has an elongated shape, whose main dimension extends mainly according to a direction of development parallel to that first X axis.

Said working plane 2 comprises a plurality of supporting bars $21_{a,b,...i,...n}$ which are slidingly coupled to said base 1 through a first 22 and a second guide 23, integral to said base 1.

Said plurality of supporting bars $21_{a,b,...i...n}$ can be operated manually, along said first 22 and second 23 guides of said base 1, according to the X axis.

Each supporting bar $21_i$ of said plurality of supporting bars $21_{a,b,...i...n}$ is aligned in a direction parallel to said second Y-axis.

Said crossbar 31 is slidingly coupled to said base 1 in a direction parallel to said first X-axis, and the machining head 32 is slidingly coupled to said crossbar 31 along a direction parallel to said second Y-axis. Said machining head 32 can also be movable along a direction parallel to said third Z-axis. Said machining head 32 can also rotate around one, two or three or more rotation axes. Said plurality of supporting bars $21_{a,b,...i...n}$ is suitable for supporting panels W to be machined.

On each supporting bar $21_i$ there is slidingly mounted a plurality of mobile devices $24_{aa,bb\cdots ij\cdots nn}$, such as suction cups or clamps, for locking the panels W to be processed, by means of vacuum systems, during the processing of the panel W by part said machining head 32.

Said plurality of mobile devices $24_{aa,bb,...ij...nn}$ can be operated manually, along the respective bars of said plurality of supporting bars $21_{a,b,...j,...n}$ according to the Y axis.

Each supporting bar $21_i$ and each mobile device $24_{ij}$ comprise means of feedback to provide the operator with information on their correct movement.

Said means of feedback may be means for displaying, to provide visual information to the operator.

Said means of feedback for the operator can also be acoustic or tactile, such as a vibrating means.

Said visual means, acoustic or tactile receive the signals sent by said logical control unit U and provide visual, acoustic or tactile feedback to the operator.

Each supporting bar $21_i$ and each mobile devices $24_{ij}$ comprise at least one sensor, not shown in the figure, capable of detecting respectively the position in the working plane 2 and the position along the supporting bar $21_i$.

In addition, each supporting bar $21_i$ and each mobile device $24_{ij}$ comprise a wireless reception and transmission module for exchanging data with said control logic unit U.

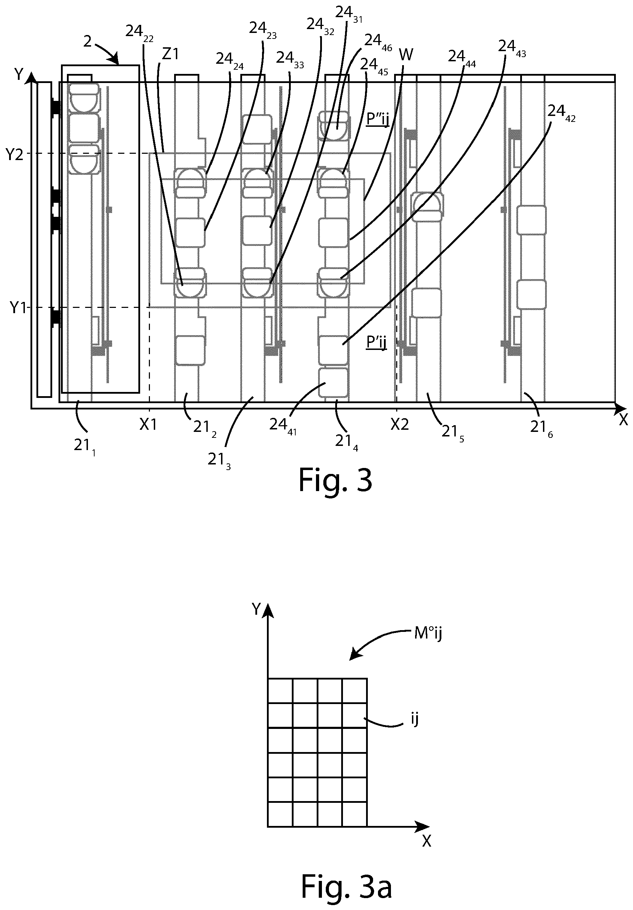

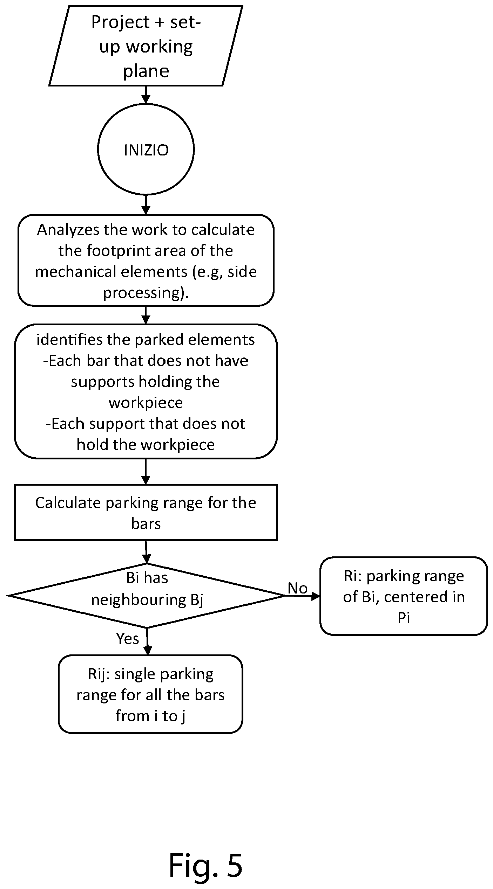

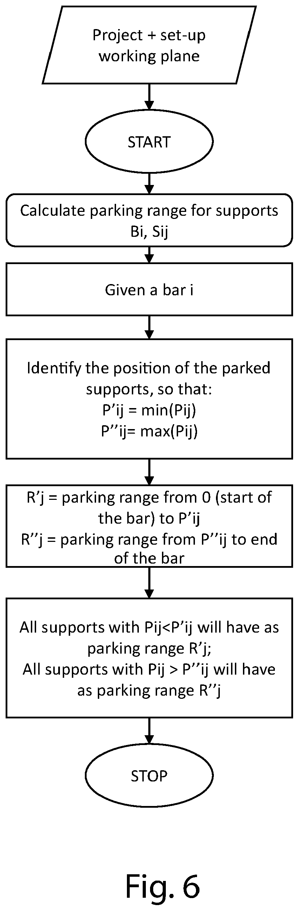

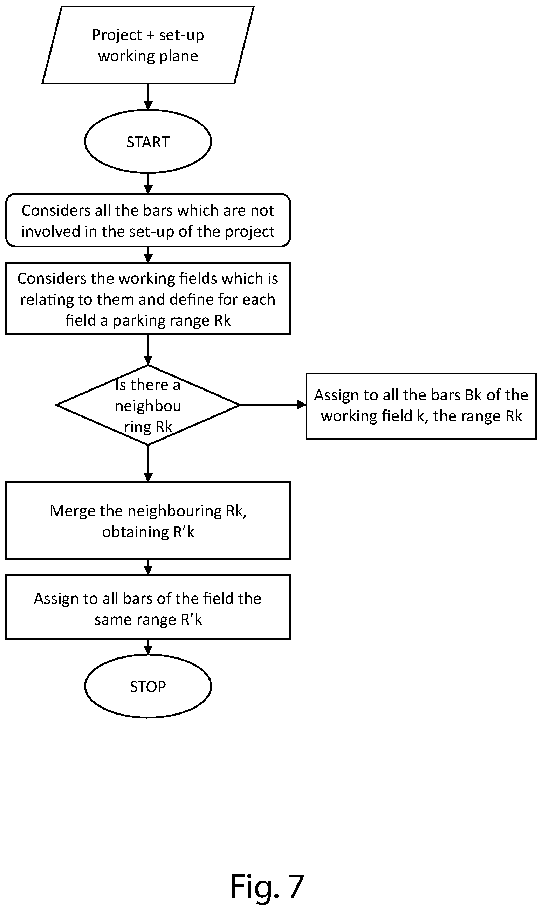

Referring now to figures 3-7, starting from an initial configuration of said working plane 2 and the program to be executed on a panel W, the positioning intervals R of all moving devices that are not involved in machining are calculated.

First of all, the working plane 2 is discretized, or divided into squares or cells, then it is verified, for each cell, the potential collision between said machining head 32 during the intended processing and the mobile devices $21_{a,b,...i,...n}$; $24_{aa,bb,...ij,...nn}$ that are not involved in the machining program, thus obtaining a collision matrix of the working plane $M_{ij}^0$, in which each "discrete" point or cell is indexed with a row index i and a column index j, as shown in figure 3a.

In a preferred form of realization, each cell $ij$ of said $M_{ij}^0$ matrix represents a real space of the square X-Y plane with sides of 1 mm. In other forms of realizations, different measures may be envisaged.

Subsequently, taking into account the initial configuration of the supporting bars $21_{a,b,...i,...n}$ and mobile devices $24_{aa,bb,..ij...nn}$ in the working plane 2, of the overall dimensions and trajectories of the machining head 32, which can also perform processes that require lateral access to the panel W to be processed and, above all, of the type of work to be carried out, according to the selected program, it is possible to determine a zone $Z_1$ in which said working unit 3 performs the processing and in which the supporting bars $21_{a, b,...i,...n}$ and mobile devices $24_{aa,bb,...ij... nn}$ are involved in the processing.

Referring in particular to Figure 3, zone Z1 will have boundary coordinates X1, X2 and Y1, Y2 along said first X and second Y axis, respectively, which correspond to cells of the collision matrix $M_{ij}^0$.

Once the zone $Z_1$ has been defined, the positioning intervals or positioning *ranges* R of all the supporting bars $21_{a,b,...i,...n}$ and mobile devices $24_{aa,bb,...ij...nn}$ that are not involved in the processing are calculated,, so that they occupy a safety space free from processing, and so as not to excessively alter the initial configuration of the working plane 2.

The positioning *range* R of the supporting bars $21_{a,b,...i...n}$ not involved in the machining is numerically calculated from the value 0, which coincides with the meeting point of a first side of the working plane 2, parallel to said first axis X, and a second side of the working plane parallel to that second axis Y, up to the coordinate X1 of zone Z1 and from the coordinate X2 to the end of the working plane 2 or up to the next bar, also taking into account the geometric dimensions of all the components involved.

In the specific example shown in Figure 3, the supporting bars involved in machining are the bars $21_2$, $21_3$ e $21_4$ and $21_4$ and the mobile devices involved in machining are $24_{22}$, $24_{23}$, $24_{24}$ for bar $21_2$, mobile devices $24_{31}$, $24_{32}$, $24_{33}$ for bar $21_3$, and mobile devices $24_{43}$, $24_{44}$, $24_{45}$ for bar $21_4$.

Therefore, the $21_1$ supporting bar have a positioning *range* R from 0 to X1.

The positioning *range* R of a supporting bar $21_i$ not involved in the processing and that does not have neighboring bars has as its average value the position that said bar occupied in the initial configuration, so as not to excessively alter the configuration of the working plane 2.

The positioning *range* R of a supporting bar 2i not involved in the processing which has neighboring bars not involved in the processing has instead a determined value, so as not to invade the space of the neighboring bars.

For example, the positioning range R of bar $21_5$ will have a positioning *range* R from X2 up to the X-axis coordinate occupied by bar $21_6$.

As for the position of mobile devices $24_{aa,bb,...ij... nn}$ the positioning *range* R is calculated for each bar.

For bars not involved in machining, the supports can occupy any position, conveniently the position of the initial configuration, for the bars involved in the processing, the supports not involved in the processing can occupy the space from the beginning of the bar to the first ordered Y1 of zone $Z_1$ and from the second ordered Y2 of zone $Z_1$ to the end of the bar.

For example, mobile device $244_6$ can be moved to P"$_{ij}$ space, and suction cups $24_{41}$ and $24_{42}$ can be moved to P'$_{ij}$ space

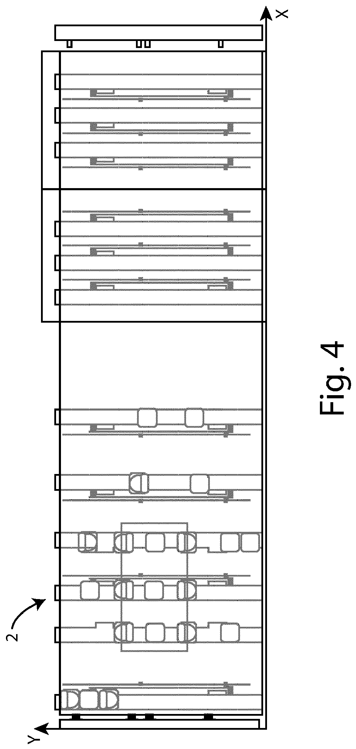

With reference to Figure 4, for the area of working plane 2 which in the initial configuration includes parked bars not involved in machining, the positioning *range* R is calculated from the second coordinate X2 of zone $Z_1$ to the end of working plane 2, or, if there is a nearby parking area, the positioning *ranges* R are added together.

As is evident from the description above, the method for determining the position of mobile devices in a working plane and the related work center allow to change the initial configuration of the working plane quickly and safely, positioning all mobile devices in specific positions.

This invention has been described as illustrative, but not limitative purpose, according to its preferred embodiment, but it is understood that variations and/or modifications may be made by a skilled person without being outside the scope of protection, as defined by the attached claims.

**Claims**

1. Method for determining the position of mobile devices ($21_{a,b,...i,...n}$; $24_{aa,bb,...ij,...nn}$) in a working center (C) for machining at least one workpiece (W), in particular a panel, wherein said working center (C) comprises a working plane (2), for supporting said at least one panel (W), comprising in turn mobile devices ($21_{a,b,...i,...n}$; $24_{aa,bb,..ij,...nn}$) capable to move in a first direction parallel to a first axis (X) and a second direction parallel to a second axis (Y) orthogonal to said first direction, a working unit (3) comprising at least one working head (32), said method comprising the following steps:

   *a.* acquiring a machining program, comprising the overall dimensions and/or the trajectories of said at least one working head (32) and the types of machining to be performed on said panel (W);
   *b.* acquiring the arrangement of the initial configuration of said mobile devices ($21_{a,b,...i,...n}$;

$24_{aa,bb,...ij,...nn}$) in said working plane (2);

c. identifying a zone ($Z_1$) on said working plane (2) in which a group of said mobile devices involved in said machining program is arranged ($21_{a,b,...i,...n}$; $24_{aa,bb,...ij,...nn}$);

d. identifying the remaining group of said mobile devices ($21_{a,b,...i,...n}$; $24_{aa,bb,...ij,...nn}$) not involved in said machining program;

e. calculating a positioning range (R) for each mobile device of said remaining group of said mobile devices ($21_{a,b,...i,...n}$; $24_{aa,bb,...ij,...nn}$) along said first direction and/or along said second direction, with respect to said initial configuration, based on the dimensions of said machining zone ($Z1$).

2. Method according to the preceding claim, **characterized in that** it comprises the following further steps:

f. discretizing said working plane (2) into cells, in which each cell ($ij$) corresponds to an area of the surface of said working plane (2);

f.1. checking the potential collision in each cell ($ij$) between said working head (32), in the execution of said machining program, and said mobile devices ($21_{a,b,...i,...n}$; $24_{aa,bb,...ij,...nn}$) not involved in said machining program as a function of the trajectory and/or the overall dimensions of said working head (32);

f.2. determining, on the basis of said steps f. and f.1, a collision matrix ($M_{ij}^0$).

3. Method according to any one of the preceding claims 2 and 3, **characterized**

**in that** said cells ($ij$) are squared and equal, and **in that** the measurement of the side of said cells is 1 millimeter.

4. Method according to any one of the preceding claims, wherein said mobile devices ($21_{a,b,...i,...n}$; $24_{aa,bb,...ij,...nn}$) comprise supporting bars ($21_{a,b,...i,...n}$) movable on said working plane (2) along said first direction and mobile coupling devices ($24_{aa,bb,...ij,...nn}$) for said workpiece (W), in particular suction cups or clamps, slidingly coupled to said supporting bars ($21_{a,b,...i,...n}$) and movable along said second direction, **characterized in that** said step e. of calculating a positioning range (R) comprises the following sub-steps:

e.1. calculating the positioning range (R) of said supporting bars ($21_{a,b,...i,...n}$) along said first direction;

e.2. for each of said supporting bars

($21_{a,b,...i,...n}$), calculating the positioning range (R) of said mobile devices ($24_{aa,bb,...ij,...nn}$) along said second direction.

5. Method according to any one of the preceding claims, wherein said mobile devices ($21_{a,b,...i,...n}$; $24_{aa,bb,...ij,...nn}$) comprise supporting bars ($21_{a,b,...i,...n}$) movable on said working plane (2) along said first direction and mobile coupling devices ($24_{aa,bb,...ij,...nn}$) for said workpiece (W), in particular suction cups or clamps, slidingly coupled to said supporting bars ($21_{a,b,...i,...n}$) and movable along said second direction, **characterized in that** it comprises the following step:

c.1. for each of said supporting bars ($21_{a,b,...i,...n}$) arranged in said zone ($Z_1$), calculating the positioning range (R) of said mobile coupling devices ($24_{aa,bb,...ij,...nn}$), along said second direction.

6. Working center (C) for machining workpieces (W) in particular panels in wood, ceramic, plastic, glass, fiberglass, comprising:

- a base (1) for supporting said working center (C);

- a working unit (3) comprising at least one working head (32) which supports at least one tool;

- a working plane (2), coupled to said base (1), for supporting said workpieces (W), comprising in turn

- a plurality of supporting bars ($21_{a,b,...,i,...n}$), slidingly coupled and manually movable by an operator along said base (1);

- a plurality of mobile coupling devices ($24_{aa,bb,...ij,...nn}$), for coupling said workpieces (W) to be machined, slidingly coupled and manually movable by an operator along respective supporting bars ($21_{a,b,...,i,...n}$);

- a logic control unit (U) for the operation of said working center (C), in which configurations of said working plane (2) for the machining of said workpieces are stored;

said working center (C) being **characterized in that** said logic control unit (U) is configured to carry out the steps of the positioning method according to any one of claims 1-5 and to associate indications for an operator to said calculated positioning range (R), for the arrangement of said plurality of supporting bars ($21_{a,b,...,i,...n}$) and said plurality of mobile coupling devices ($24_{aa,bb,...ij,...nn}$).

7. Working center (C) according to the preceding claim, **characterized in that** said mobile devices of said plurality of mobile coupling devices ($24_{aa,bb,...ij,...nn}$) are suction cups or clamps.

8. A computer program comprising instructions which, when the program is executed by a computer, cause the computer to execute the positioning determination of the mobile devices ($21_{a,b,...i,...n}$; $24_{aa,bb,...ij,...nn}$) in a working plane (2) method, according to any one of claims 1-5.

9. A computer readable storage medium comprising instructions which, when executed by a computer, cause the computer to execute the steps of the positioning determination of the mobile devices ($21_{a,b,...i,...n}$; $24_{aa,bb,...ij,...nn}$) in a working plane (2) method, according to any one of claims 1-5.

Fig. 1

Fig. 2

Fig. 3

Fig. 3a

Fig. 4

EP 4 273 642 A1

Project + set-up working plane

INIZIO

Analyzes the work to calculate the footprint area of the mechanical elements (e.g, side processing).

identifies the parked elements
-Each bar that does not have supports holding the workpiece
-Each support that does not hold the workpiece

Calculate parking range for the bars

Bi has neighbouring Bj

No → Ri: parking range of Bi, centered in Pi

Yes ↓

Rij: single parking range for all the bars from i to j

Fig. 5

```
┌─────────────────────────────┐
│   Project + set-up          │
│   working plane             │
└─────────────────────────────┘
              │
              ▼
         (  START  )
              │
              ▼
┌─────────────────────────────┐
│ Calculate parking range for │
│         supports Bi, Sij    │
└─────────────────────────────┘
              │
              ▼
┌─────────────────────────────┐
│      Given a bar i          │
└─────────────────────────────┘
              │
              ▼
┌─────────────────────────────┐
│ Identify the position of    │
│ the parked supports, so     │
│ that:                       │
│ P'ij = min(Pij)             │
│ P''ij = max(Pij)            │
└─────────────────────────────┘
              │
              ▼
┌─────────────────────────────┐
│ R'j = parking range from 0  │
│ (start of the bar) to P'ij  │
│ R''j = parking range from   │
│ P''ij to end of the bar     │
└─────────────────────────────┘
              │
              ▼
┌─────────────────────────────┐
│ All supports with Pij<P'ij  │
│ will have as parking range  │
│ R'j;                        │
│ All supports with Pij>P''ij │
│ will have as parking range  │
│ R''j                        │
└─────────────────────────────┘
              │
              ▼
         (  STOP  )
```

# Fig. 6

Project + set-up
working plane

START

Considers all the bars which are not
involved in the set-up of the project

Considers the working fields which is
relating to them and define for each
field a parking range Rk

Is there a
neighbou
ring Rk → Assign to all the bars Bk of the
working field k, the range Rk

Merge the neighbouring Rk,
obtaining R'k

Assign to all bars of the field the
same range R'k

STOP

Fig. 7

Europäisches
Patentamt

European
Patent Office

Office européen
des brevets

# EUROPEAN SEARCH REPORT

**Application Number**

EP 23 17 0589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 507 033 B1 (TORRES MARTINEZ M [ES]) 1 February 1995 (1995-02-01) * column 5, line 45 – line 49 * * column 6, line 48 – line 53 * * column 7, line 27 – line 33 * * figures 1,2 * ----- | 1-9 | INV. G05B19/4061 |
| Y | JP 2015 073977 A (HIRATA SPINNING) 20 April 2015 (2015-04-20) * paragraph [0060] * ----- | 1-3,6-9 | |
| Y | DE 20 2018 100790 U1 (RIERGE S A [ES]) 20 March 2018 (2018-03-20) * paragraph [0034] * ----- | 1-9 | |
| A | EP 1 872 919 A1 (SCM GROUP SPA [IT]) 2 January 2008 (2008-01-02) * the whole document * ----- | 1-9 | |
| A | EP 3 658 345 B1 (BIESSE SPA [IT]) 7 July 2021 (2021-07-07) * the whole document * ----- | 1-9 | TECHNICAL FIELDS SEARCHED (IPC) G05B B23Q |

The present search report has been drawn up for all claims

| Place of search | Date of completion of the search | Examiner |
|---|---|---|
| The Hague | 12 September 2023 | Lefeure, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0589

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2023

| Patent document cited in search report | | | Publication date | Patent family member(s) | | Publication date |
|---|---|---|---|---|---|---|
| EP | 0507033 | B1 | 01-02-1995 | CA | 2060577 A1 | 06-10-1992 |
| | | | | DE | 69107196 T2 | 24-05-1995 |
| | | | | EP | 0507033 A1 | 07-10-1992 |
| | | | | JP | 3101040 B2 | 23-10-2000 |
| | | | | JP | H0596434 A | 20-04-1993 |
| | | | | US | 5163793 A | 17-11-1992 |
| JP | 2015073977 | A | 20-04-2015 | CN | 104549896 A | 29-04-2015 |
| | | | | JP | 6339341 B2 | 06-06-2018 |
| | | | | JP | 2015073977 A | 20-04-2015 |
| | | | | KR | 20150042701 A | 21-04-2015 |
| | | | | TW | 201532680 A | 01-09-2015 |
| DE | 202018100790 | U1 | 20-03-2018 | AT | 16990 U1 | 15-02-2021 |
| | | | | DE | 202018100790 U1 | 20-03-2018 |
| | | | | ES | 1192187 U | 28-09-2017 |
| EP | 1872919 | A1 | 02-01-2008 | EP | 1872919 A1 | 02-01-2008 |
| | | | | ES | 2323095 T3 | 06-07-2009 |
| EP | 3658345 | B1 | 07-07-2021 | EP | 3658345 A1 | 03-06-2020 |
| | | | | ES | 2882275 T3 | 01-12-2021 |
| | | | | WO | 2019021172 A1 | 31-01-2019 |

EPO FORM P0459

For more details about this annex : see Official Journal of the European Patent Office, No. 12/82